(19) Europäisches Patentamt
European Patent Office
Office européen des brevets

(11) **EP 4 068 613 A1**

(12) **EUROPEAN PATENT APPLICATION**

(43) Date of publication:
**05.10.2022  Bulletin 2022/40**

(21) Application number: **21166345.5**

(22) Date of filing: **31.03.2021**

(51) International Patent Classification (IPC):
**H02M 7/48** (2007.01)   **H02M 1/00** (2006.01)
**H02M 3/337** (2006.01)   **H02M 7/538** (2007.01)

(52) Cooperative Patent Classification (CPC):
**H02M 7/4815; H02M 1/0058; H02M 3/3376;
H02M 7/53803**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Infineon Technologies Austria AG
9500 Villach (AT)**

(72) Inventor: **KIM, Tae Yong
589656 Singapore (SG)**

(74) Representative: **Westphal, Mussgnug & Partner,
Patentanwälte mbB
Werinherstraße 79
81541 München (DE)**

(54) **METHOD AND CONTROL CIRCUIT FOR OPERATING A RESONANT CONVERTER**

(57)   A method and a control circuit are disclosed. The method includes: in a resonant converter comprising a switching circuit (2) coupled to an input (11, 12), and comprising a resonant circuit (3) coupled to the switching circuit (2), alternatingly operating the switching circuit (2) in an on-state and a high-impedance state; monitoring a hard commutation parameter; if the hard commutation parameter, at an end of at least one of the on-states, meets a certain condition, operating the switching circuit (2) in the high-impedance state for a predefined duration (Td1, Td2); and if the hard commutation parameter, at the end of the least one of the on-states, does not meets the certain condition, operating the switching circuit (2) in the high-impedance state at least until the hard commutation parameter meets the certain condition.

FIG 5

**Description**

This disclosure relates in general to a resonant power converter. More specifically, the disclosure relates to a method and a control circuit for operating a power converter.

A resonant converter is a certain type of power converter that includes a switching circuit configured to generate an alternating voltage based on a direct input voltage received at an input, a resonant circuit configured to receive the alternating voltage, and a rectifier connected to the resonant circuit and configured to provide an output voltage and an output current to a load. In this type of power converter, an input power received at the input and, therefore, an output power provided to the load can be adjusted by adjusting a frequency of the alternating voltage.

The switching circuit may include several electronic switches that each include a freewheeling element. These electronic switches are alternatingly switched on and off such that there are dead times in which both switches are switched off. During the dead times, a current may flow through one or more of the freewheeling elements.

In certain operating scenarios of the resonant converter hard commutation of the half-bridge may occur. "Hard commutation" occurs when during a dead time current flows through the freewheeling of one of the electronic switches and another one of the switches on. Hard commutation is associated with relatively high losses. Furthermore, when the electronic switch is a MOSFET (Metal Oxide Semiconductor Field-Effect Transistor) and the freewheeling element is an integrated body diode of the MOSFET, hard commutation may cause a degradation or damage of the MOSFET.

There is therefore a need for a method for operating a resonant converter that avoids hard commutation.

One example relates to a method. The method includes, in a resonant converter with a switching circuit coupled to an input, and a resonant circuit coupled to the switching circuit, alternatingly operating the switching circuit in an on-state and a high-impedance state; monitoring a hard commutation parameter; if the hard commutation parameter, at an end of at least one of the on-states, meets a certain condition, operating the switching circuit in the high-impedance state for a predefined duration; and if the hard commutation parameter, at the end of the least one of the on-states, does not meets the certain condition, operating the switching circuit in the high-impedance state at least until the hard commutation parameter meets the certain condition.

Another example relates to a control circuit. The control circuit is configured to alternatingly operate a switching circuit coupled between an input and a resonant circuit in a resonant power converter in an on-state and a high-impedance state; monitor a hard commutation parameter; if the hard commutation parameter, at an end of at least one of the on-states, meets a certain condition, operate the switching circuit in the high-impedance state for a predefined duration; and if the hard commutation parameter, at the end of the at least one of the on-states does not meets the certain condition, operate the switching circuit in the high-impedance state at least until the hard commutation parameter meets the certain condition.

Examples are explained below with reference to the drawings. The drawings serve to illustrate certain principles, so that only aspects necessary for understanding these principles are illustrated. The drawings are not to scale. In the drawings the same reference characters denote like features.

Figure 1 shows a block diagram of a resonant power converter according to one example;

Figure 2 illustrates one example of a resonant circuit of the resonant power converter according to Figure 1;

Figure 3 shows another example of the resonant circuit;

Figure 4 shows signal diagrams that illustrate operating a switching circuit of the resonant power converter in first and second on-states and first and second high-impedance states;

Figure 5 shows a flowchart that illustrates one example of a method for operating the switching circuit of the resonant power converter in such a way that hard commutation is avoided;

Figure 6 shows one example of a controller of the resonant power converter;

Figure 7 shows one example of a feedback circuit of the resonant power converter;

Figure 8 shows one example of the switching circuit;

Figure 9 shows signal diagrams that illustrate one way of operating the switching circuit shown in Figure 8 to generate an alternating voltage;

Figures 10A and 10B show signal diagrams that illustrate a transition of the switching circuit shown in Figure 8 from an on-state to a successive on-state;

Figures 11A and 11B show signal diagrams that illustrate a transition of the switching circuit shown in Figure 8 from an on-state to a successive on-state;

Figure 12 shows signal diagrams that illustrate using the method according to Figure 5 in order to avoid a first type hard commutation in a switching circuit of the type shown in Figure 8;

Figure 13 shows signal diagrams that illustrate using the method according to Figure 5 in order to avoid a second type hard commutation in a switching circuit of the type shown in Figure 8;

Figures 14 and 15 illustrate different examples of a hard commutation parameter monitoring circuit;

Figure 16 shows another example of the switching circuit;

Figure 17 shows signal diagrams that illustrate one way of operating the switching circuit shown in Figure 16 to generate an alternating voltage; and

Figure 18 shows one example of a rectifier circuit of the power converter according to Figure 1.

In the following detailed description, reference is made to the accompanying drawings. The drawings form a part of the description and for the purpose of illustration show examples of how the invention may be used and implemented. It is to be understood that the features of the various embodiments described herein may be combined with each other, unless specifically noted otherwise.

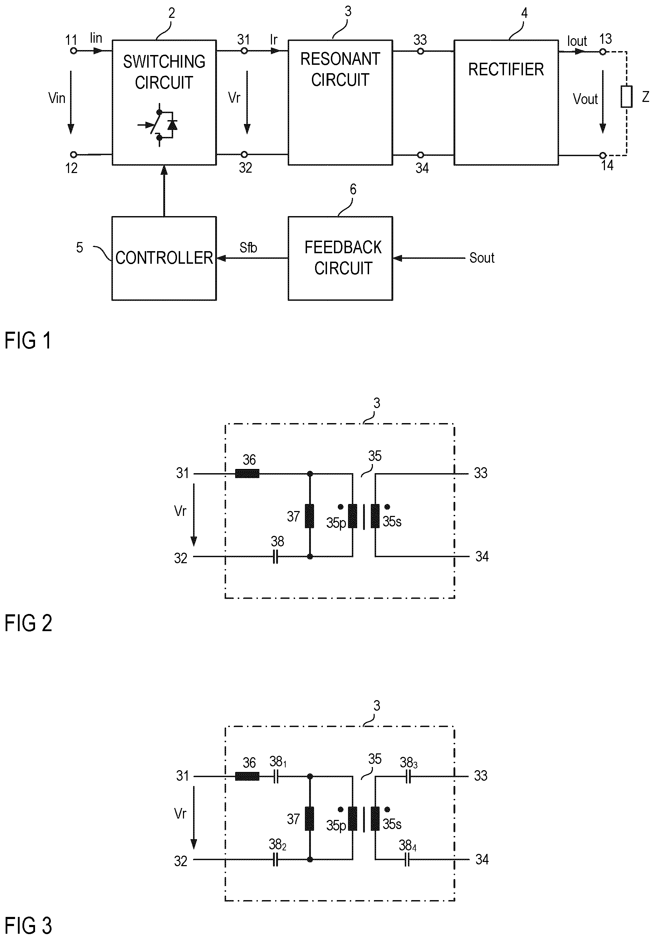

Figure 1 schematically illustrates one example of a resonant power converter. The resonant power converter shown in Figure 1 includes an input 11, 12 configured to receive an input voltage Vin and an input current Iin from a power source (not shown). The power converter further includes an output 13, 14 configured to provide an output voltage Vout and an output current Iout to a load Z (illustrated in dashed lines). According to one example, the input voltage Vin is a direct voltage (DC voltage) and the output voltage Vout is a direct voltage. According to one example, the power converter is configured to regulate the output voltage Vout such that the output voltage Vout essentially equals a predefined reference voltage. In this example, the power converter acts as a voltage source. According to another example, the power converter is configured to regulate the output current Iout such that the output current Iout essentially equals a reference current. In this example, the power converter acts as a current source.

Referring to Figure 1, the power converter further includes a switching circuit 2, a resonant circuit 3, and a rectifier circuit 4. The switching circuit 2 is connected between the input 11, 12 and the resonant circuit 3 and is configured to generate an alternating voltage Vr received at an input 31, 32 of the resonant circuit 3 based on the input voltage Vin. The alternating voltage Vr received by the resonant circuit 3 may also be referred to as excitation voltage Vr. The rectifier circuit 4 is connected between an output 33, 34 of the resonant circuit 3 and the output 13, 14 of the power converter.

Referring to Figure 1, the power converter further includes a control circuit (controller) 5. The controller is configured to control operation of the switching circuit 2 such that the output voltage Vout or the output current Iout is regulated. For this, the controller 5 receives a feedback signal Sfb from a feedback circuit 6. The feedback circuit 6 receives an output signal Sout that represents the output parameter that is to be regulated. That is, the output signal Sout represents the output voltage Vout when the output voltage Vout is to be regulated, and the output signal Sout represents the output current Iout when the output current Iout is to be regulated. The output signal Sout can be generated in a conventional way by measuring the output voltage Vout or the output current Iout. According to one example, the output signal Sout is generated such that it is proportional to the respective output parameter (Vout or Iout).

The feedback circuit 6 generates the feedback signal Sfb based on the output signal Sout. According to one example, the feedback signal Sfb is generated such that the feedback signal Sfb essentially represents a power consumption of the load Z, so as to enable the controller 5 to adjust an input power received by the switching circuit 2 from the input 11, 12 such that the received input power essentially equals the power consumption of the load. This is explained in detail herein further below.

According to one example, the power converter is an LLC converter. In this example, the resonant circuit 3 includes an LLC circuit. One example of an LLC circuit is illustrated in Figure 2. The LLC circuit shown in Figure 2 includes a transformer 35 with a primary winding 35p and a secondary winding 35s that are inductively coupled. The primary winding 35p is coupled to the input 31, 32 of the resonant circuit 3, and the secondary winding 35s is coupled to the output 33, 34 of the resonant circuit 3. According to one example (illustrated), the primary winding 35p and the secondary winding 35s have the same winding sense. According to another example (not shown), the primary winding 35p and the secondary winding 35s have opposite winding senses.

The resonant circuit 3 further includes a first inductor 36 connected in series with the primary winding 35p, a second inductor 37 connected in parallel with the primary winding 35p, and a capacitor 38 connected in series with the first inductor 36 and the parallel circuit including the primary winding 35p and the second inductor 37. The series circuit including the first inductor 36, the capacitor 38 and the parallel circuit with the primary winding 35p and the second inductor 37 is connected between a first input node 31 and a second input node 32 of the input of the resonant circuit 3. According to one example, the second inductor 37 is an inductor in addition to the primary winding 35p. According to another example, the second inductor 37 is part of the primary winding 35p of the transformer 35.

In the example illustrated in Figure 2, the capacitor 38 is connected between the second input node 32 and the parallel circuit with the primary winding 35p and the second inductor 37. This, however, is only an example. According to another example (not shown), the capacitor 38 is connected between the first input node 31 and the first inductor 36 or is connected between the first inductor 36 and the parallel circuit with the primary winding 35p and the second inductor 37.

According to another example illustrated in Figure 3, the resonant circuit 3, instead of only one capacitor 38, includes several capacitors. In the example shown in Figure 3, the resonant circuit 3 includes four capacitors, a first capacitor $38_1$ connected between the first inductor 36 and the parallel circuit 35p, 37, a second capacitor $38_2$ connected between the parallel circuit 35p, 37 and the second input node 32, a third capacitor $38_3$ connected between the secondary winding 35s and a first output node 33, and a fourth capacitor $38_4$ connected between the secondary winding 35s and a second output node 34.

It should be noted that the resonant circuit 3 is not restricted to be implemented as an LLC circuit. Other types of the resonant circuits may be used as well. Examples of other types of resonant circuits include, but are not restricted to, LCC circuits (that includes one inductor and two capacitors), CLLC circuits (that include two one inductors and two capacitors), or series resonant circuits (that include one inductor and one capacitor).

For generating the alternating voltage Vr based on the input voltage Vin, the controller 5 operates the switching circuit 2 alternatingly in an on-state and a high-impedance state. More specifically, the controller 5 alternatingly operates the switching circuit 2 in a first on-state and a second on-state and the high-impedance state between each first on-state and the respective successive second on-state and between each second on-state and the respective successive first on-state.

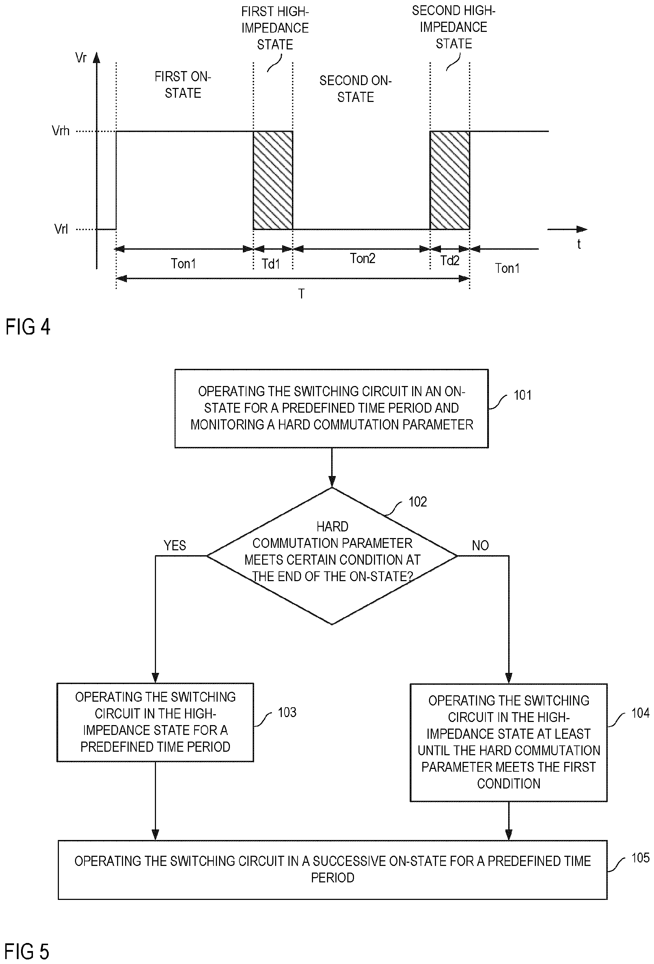

Referring to Figure 4, which schematically illustrates a signal waveform of the alternating voltage Vr, operating the switching circuit 2 in the first on-state causes the alternating voltage Vr to have a first voltage level Vr1, and operating the switching circuit 2 in the second on-state causes the alternating voltage Vr to have a second voltage level Vr2 different from the first voltage level Vr1. The first and second voltage levels Vr1, Vr2 are dependent on the specific implementation of the switching circuit 2. This is explained in detail herein further below. In the high-impedance states, the alternating voltage Vr is defined by the resonant circuit 3 and may essentially range between a voltage level that is slightly above the first voltage level Vr1 and a voltage level that is slightly below the second voltage level Vr2. This is also explained in detail herein further below.

In the following a high-impedance state between a first on-state and a successive second on-state is also referred to as first high-impedance state. Equivalently, a high-impedance state between a second on-state and a successive first on-state is also referred to as second high-impedance state. It should be noted, however, that an operating state of the switching circuit 2 may be the same in both the first high-impedance state and the second high-impedance state.

Referring to the above, the resonant converter is configured to regulate the output current Iout or the output voltage. According to one example, regulating this output parameter includes regulating an input power of the resonant converter such that the input power received at the input 11, 12 meets the power consumption of the load Z in such a way that the regulated output parameter (Iout or Vout) has the desired (current or voltage) level.

The input power is essentially given by the input voltage Vin multiplied with an average input current Iin, received at the input 11, 12. In the resonant converter, the input power can be adjusted by suitably adjusting a frequency fr of the alternating voltage Vr generated by the switching circuit 2 based on the input voltage Vin. More specifically, the input power can be adjusted by varying the frequency fr of the alternating voltage Vr relative to a resonant frequency fres of the resonant circuit 3. The resonant frequency fres of the resonant circuit 3 is defined by the at least one inductor 36, 37 and the at least one capacitor 38 included in the resonant circuit 3. This is commonly known, so that no further explanation is required in this regard. Dependent on a power consumption of the load Z, the alternating voltage Vr may be below the resonant frequency fres or above the resonant frequency fres.

The frequency fr of the alternating voltage Vr essentially equals a frequency at which the first and second on-states of the switching circuit 2 occur governed by the controller 5. The frequency fr of the alternating voltage Vr is the reciprocal of a duration T of one period of the alternating voltage Vr. Referring to Figure 4, one period T includes a first on-time Ton1 in which the switching circuit 2 is in the first on-state, a second on-time Ton2 in which the switching circuit 2 is in the second on-state, a first high-impedance time Td1 in which the switching circuit 2 is in the first high-impedance state, and a second high-impedance time Td2 in which the switching circuit 2 is in the second high-impedance state.

EP 4 068 613 A1

That is,

$$T = \frac{1}{fr} = Ton1 + Td1 + Ton2 + Td2 \qquad (1).$$

The switching circuit 2 includes at least two electronic switches. One of these electronic switches is schematically illustrated in Figure 1. Each of these electronic switches includes a switching element and a freewheeling element connected in parallel with the switching element.

According to one example, at least one of the electronic switches is a MOSFET such as, for example, an n-type MOSFET. In this case, the freewheeling element may be formed by an integrated body diode of the MOSFET. This, however, is only an example. According to another example, the switching element and the freewheeling element of one electronic switch are separate semiconductor devices. According to one example, the switching element is one of a MOSFET (Metal Oxide Semiconductor Field-Effect Transistor), an IGBT (Insulated Gate Bipolar Transistor), or a HEMT (High Electron Mobility Transistor), and the freewheeling element is a pn diode or a Schottky diode connected in parallel with the switching element. According to one example, the Schottky diode is a silicon carbide (SiC) Schottky diode. The electronic switches in the switching circuit may be implemented in the same way. That is the same type of electronic switch may be used for implementing the electronic switches in the switching circuit 2. Alternatively, the electronic switches or may be implemented in different ways. That is, two or more different types of electronic switches are used for implementing the electronic switches in the switching circuit 2.

Operating the switching circuit 2 to generate the alternating voltage Vr includes alternatingly switching on and the switching off the switches in the switching circuit 2. In certain operating scenarios, hard commutation may occur in the switching circuit 2. Hard commutation is a phenomena that occurs when the switching element of an electronic is switched off, the freewheeling element of the electronic switch is forward biased so that it conducts a current, and another one of the electronic switches on so that the freewheeling element of the electronic switch becomes reverse biased and blocks. When the freewheeling element is a pn diode, hard commutation is associated with a reverses recovery process in the diode. In particular, when the electronic switch is a MOSFET and the freewheeling element is an integrated body diode of the MOSFET, hard commutation may cause a degradation or may damage the MOSFET.

Furthermore, hard commutation may cause relatively high losses in the switching circuit 2 and may cause high current changes (di/dt) or high voltage changes (dv/dt) which may damage the electronic switches in the switching circuit 2. This is independent of how the freewheeling elements are implemented. Thus, there is a need to avoid hard commutation in the switching circuit 2 of the resonant converter.

Figure 5 illustrates one example of a method for operating the resonant converter and, more specifically, for operating the switching circuit 2 of the resonant converter such that hard commutation is avoided. Figure 5 shows a flowchart that illustrates operating the switching circuit 2 in two successive on-states and the high-impedance state between the two successive on-states. Referring to Figure 5, the method includes operating the switching circuit 2 in an on-state for a predefined time period and monitoring a hard commutation parameter (101). The hard commutation parameter is a parameter in the resonant converter that is suitable to detect whether a hard commutation is likely to occur in the switching circuit 2 in connection with the transition from the on-state to a successive on-state. Examples of the hard commutation parameter are explained herein further below.

Referring to Figure 5, the method further includes detecting whether the monitored hard commutation parameter, at the end of the on-state, meets a certain condition (102). If the hard commutation parameter meets the certain condition, the switching circuit 2 is operated in the high-impedance state for a predefined time period (103). If the hard commutation parameter does not meet the certain condition, the switching circuit 2 is operated in the high-impedance state at least until the hard commutation parameter meets the first condition (104). In both cases, after the high-impedance state, the switching circuit 2 is operated in the successive on-state for a predefined time period (105).

According to one example, the on-state according to Figure 5 is a first on-state so that the successive on-state is a second on-state. According to another example, the on-state according to Figure 5 is a second on-state so that the successive on-state is a first on-state. The method performed by the controller 5 may be configured to monitor the hard commutation parameter (a) at the end of the first on-states to avoid hard commutation in the transitions from the first on-states to the successive second on-states, (b) at the end of the second on-states to avoid hard commutation in the transitions from the second on-states to the successive first on-states, or (c) both at the end of the first on-states and the end of the second on-states to avoid hard commutation both in the transitions from the first on-states to the successive second on-states and the transitions from the second on-states to the successive first on-states.

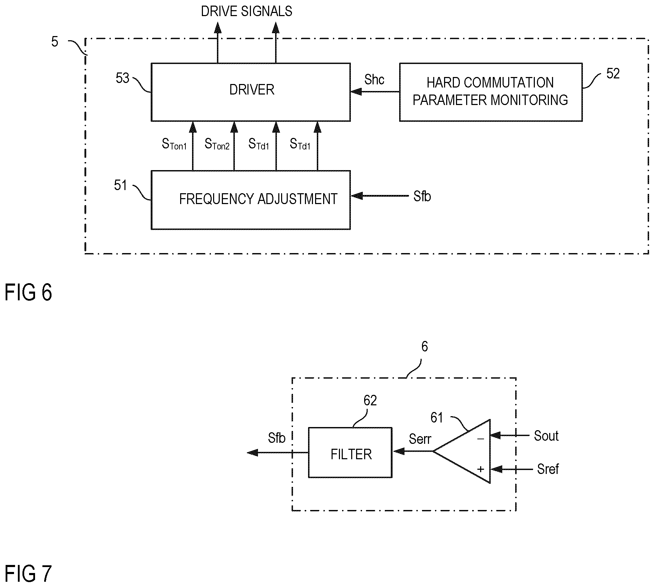

Figure 6 illustrates one example of a control circuit 5 that is configured to operate the switching circuit 2 in accordance with the method according to Figure 5. Figure 6 shows a block diagram of the control circuit 5. It should be noted that this block diagram illustrates the functional blocks of the control circuit 5 rather than a specific implementation. Those functional blocks can be implemented in various ways. According to one example, these functional blocks are implemented using dedicated circuitry. According to another example, the control circuit 5 is implemented using hardware and software. For example, the control circuit 5 includes a microcontroller and software executed by the microcontroller.

Referring to Figure 6, the control circuit 5 includes a frequency adjustment block 51. This frequency adjustment block 51 is configured to receive the feedback signal Sfb from the feedback circuit 6 and adjust the frequency of the alternating voltage Vr generated by the switching circuit 2 and received by the resonant circuit 3. According to one example, to adjust the frequency of the alternating voltage, the frequency adjustment block 51 provides a first on-time signal $S_{Ton1}$, a second on-time signal $S_{Ton1}$, a first high-impedance time signal $S_{Td1}$, and a second high-impedance time signal $S_{Td2}$. The first on-time signal $S_{Ton1}$ defines the duration of the first on-states, the second on-time signal $S_{Ton2}$ defines the duration of the second on-states, the first high-impedance time signal $S_{Td1}$ defines the duration of the first high-impedance states, and the second high-impedance time signal $S_{Td2}$ defines the duration of the second high-impedance states.

The first on-time signal $S_{Ton1}$ according to Figure 6 represents the predefined time period for operating the switching circuit 2 in the on-state according to Figure 5 (see 101) when the on-state is a first on-state. Furthermore, the first on-time signal $S_{Ton1}$ according to Figure 6 represents the predefined time period for operating the switching circuit 2 in the successive on-state according to Figure 5 (see 105) when the successive on-state is a first on-state.

The second on-time signal $S_{Ton2}$ according to Figure 6 represents the predefined time period for operating the switching circuit 2 in the on-state according to Figure 5 (see 101) when the on-state is a second on-state. Furthermore, the second on-time signal $S_{Ton2}$ according to Figure 6 represents the predefined time period for operating the switching circuit 2 in the successive on-state according to Figure 5 (see 105) when the successive on-state is a second on-state.

The first high-impedance time signal $S_{Td1}$ according to Figure 6 represents the predefined time period for operating the switching circuit 2 in the high-impedance state according to Figure 5 (see 103) when the on-state is a first on-state. Furthermore, the second on-time signal $S_{Td2}$ according to Figure 6 represents the predefined time period for operating the switching circuit 2 in the high-impedance state according to Figure 5 (see 103) when the on-state is a second on-state.

Referring to Figure 6, the control circuit 5 further includes a hard commutation parameter monitoring block 52. The hard commutation parameter monitoring block 52 is configured to monitor the hard commutation parameter and to output a hard commutation signal Shc, wherein the hard commutation signal Shc indicates whether the hard commutation parameter meets the certain condition.

Referring to Figure 6, the control circuit 5 further includes a driver block 53. The driver block is configured to generate drive signals for driving the switching circuit 2 based on the first and second on-time signals $S_{Ton1}$, $S_{Ton2}$, the first and second high-impedance time signals $S_{Td1}$, $S_{Td2}$, and the hard commutation signal Shc. More specifically, the driver block 53 is configured to drive the electronic switches in the switching circuit 2 such that the switching circuit 2 is alternatingly operated in the first-on state for the first on-time Ton1 defined by the first on-time signal $S_{Ton1}$ and the second on-state for the second on-time Ton2 defined by the second on-time signal $S_{Ton2}$. The duration of the first high-impedance state generated by the control circuit 5 is defined by the first high-impedance time signal $S_{Td1}$ when the hard commutation parameter, at the end of the first on-state, meets the certain condition. Furthermore, the duration of the second high-impedance state generated by the control circuit 5 is defined by the first high-impedance time signal $S_{Td1}$ when the hard commutation parameter, at the end of the second on-state, meets the certain condition.

It should be noted that the "certain condition" of the hard commutation parameter at the end of the first on-states may be different from the "certain condition" of the hard commutation parameter at the end of the second on-states. This is explained with reference to examples herein further below.

Referring to the above, the frequency adjustment circuit 51 is configured to adjust the frequency fr (=1/T) of the alternating voltage Vr. This may include selecting the frequency fr dependent on the feedback signal Sfb, and calculating the first and second on-times Ton1, Ton2 and the first and second high-impedance times Td1, Td2 dependent on the selected frequency fr. Selecting the frequency fr based on the feedback signal Sfb by the frequency adjustment block 51 may include selecting the frequency fr from a look-up table dependent on the feedback signal Sfb, or calculating the frequency fr in accordance with a predefined algorithm dependent on the feedback signal Sfb.

According to one example, the first and second high-impedance times Td1, Td2 are fixed and essentially equal, so that Td1 = Td2 = Td. Furthermore, the first and second on-times Ton1, Ton2 are essentially equal, so that Ton1 = Ton2 = Ton. In this case, based on equation (1), the first and second on-times Ton1, Ton2 can be calculated by the frequency based on the selected frequency fr as follows,

$$Ton = \frac{1/fr - 2 \cdot Td}{2} \qquad\qquad (2).$$

According to another example, the first and second on-times Ton1, Ton2, which may be equal, are selected from a look-up table or calculated based on the feedback signal Sfb. The first and second high-impedance times Td1, Td2 may be fixed and essentially equal in this example.

The feedback signal Sfb may change as a power consumption of the load Z changes. However, it can be assumed that a frequency at which changes of the feedback signal Sfb may occur is much slower than possible frequencies of the alternating voltage Vr. Thus, it can be assumed that the first and second on-times Ton1, Ton2 are essentially constant over several periods T of the alternating voltage Vr.

Figure 7 illustrates one example of the feedback circuit 6. In this example, the feedback circuit 6 includes an error amplifier 61 and a filter (regulator) 62 connected downstream the error amplifier 61. The error amplifier 61 receives the output signal Sout and a reference signal Sref and is configured to provide an error signal Serr based on the output signal Sout and the reference signal Sref. The reference signal Sref represents a desired signal level of the output parameter represented by the output signal Sout. That is, when the output signal Sout represents the output voltage Vout, the reference signal Sref represents a desired signal level of the output voltage Vout. Equivalently, when the output signal Sout represents the output current Iout, the reference signal Sref represents a desired signal level of the output current Iout.

The filter 62 is configured to receive the error signal Serr and provide the feedback signal Sfb based on the error signal Serr. According to one example, the filter 62 has an integrative (I) characteristic, a proportional-integrative (PI) characteristic, or a proportional-integrative-derivative (PID) characteristic.

Referring to Figures 2 and 3, the resonant circuit 3 may include a transformer 35. According to a first example, the feedback circuit 6 is arranged in a section of the resonant converter that includes the primary winding 35p of the transformer 35, that is, the feedback circuit 6 is arranged on a primary side of the resonant converter. According to a second example, the feedback circuit 6 is arranged in a section of the resonant converter that includes the secondary winding 35s of the transformer 35, that is, the feedback circuit 6 is arranged on a secondary side of the resonant converter. In the first example, the feedback circuit 6 may receive the output signal via an optocoupler or a similar device from the secondary side. In the second example, the controller 5 may receive the feedback signal Sfb via an optocoupler (not shown in the drawings) or a similar device from the feedback circuit 6 arranged on the secondary side.

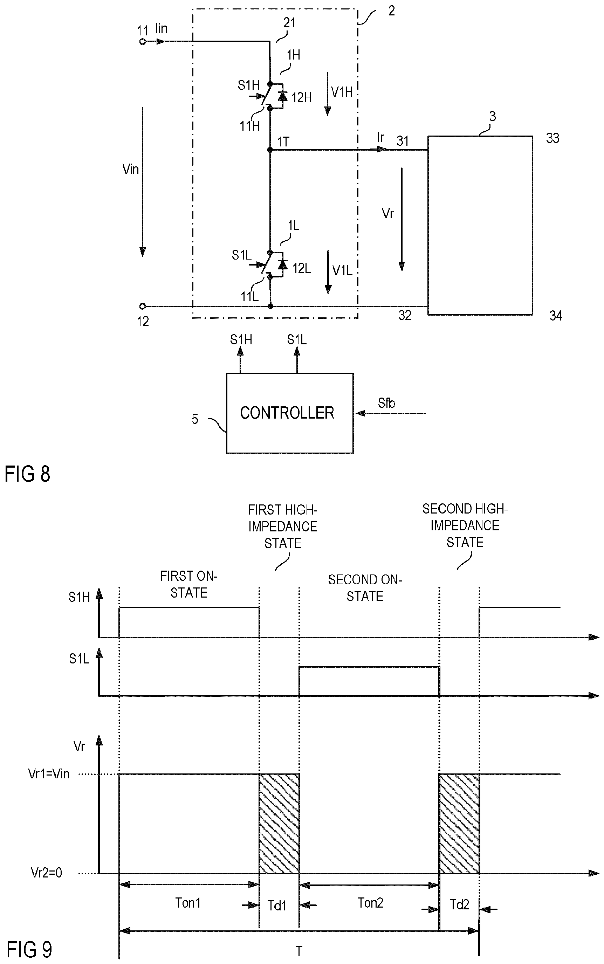

Figure 8 illustrates one example of the switching circuit 2. In this example, the switching circuit 2 includes a half-bridge 21 with a first switch 1H and a second switch 1L that are connected in series between the first input node 11 and the second input node 12 of the power converter. A tap 1T, which is a circuit node of the half-bridge 21 between the first switch 1H and the second switch 1L is connected to the first input node 31 of the resonant circuit 3. The second input node 32 of the resonant circuit 3 is connected to the second input node 12 in this example. The alternating voltage Vr provided by the switching circuit 2 essentially equals a voltage across the second switch 1L of the half-bridge 21 in this example.

In the following, the first switch 1H of the half-bridge 21 is also referred to as high-side switch and the second switch 1L is also referred to as low-side switch. Each of the high-side switch 1H and the low-side switch 1L includes a switching element 11H, 11L and a freewheeling element 12H, 12L connected in parallel with the respective switching element 11H, 11L. Everything explained above with regard to implementing the electronic switches in the switching circuit 2 applies to implementing the high-side switch 1H and the low-side switch 1L.

Referring to the above, the controller 5 generates drive signals received by the electronic switches in the switching circuit 2, wherein these drive signals switch on or switch off the switches. In the event that the switching circuit 2 is implemented as illustrated in Figure 8, the controller 5 generates a high-side drive signal S1H received by the high-side switch 1H and a low-side drive signal S1L received by the low-side switch 1L. Furthermore, the controller 5 alternatingly operates the switching circuit 2 in the first on-state and the second on-state and the high-impedance state between successive on-states. This is illustrated in Figure 9.

Figure 9 shows signal waveforms that schematically illustrate operating a switching circuit 2 of the type shown in Figure 8 in the three different operating states, the first on-state, the second on-state, and the high-impedance state. More specifically, Figure 9 shows signal waveforms of the high-side drive signal S1H, the low-side drive signal S1L, and the alternating voltage Vr. Referring to the above, the high-side drive signal S1H switches on or switches off the high-side switch 1H, and the low-side drive signal S1L switches on or switches off the low-side switch 1L. More specifically, each of these drive signals S1H, S1L has an on-level that switches on the respective switch 1H, 1L or an off-level that switches off the respective switch 1H, 1L. Just for the purpose of illustration, in the signal waveforms shown in Figure 9, a high signal level of the respective drive signal S1H, S1L represents the on-level and a low signal level of the respective drive signal S1H, S1L represents the off-level.

According to one example, the first on-state is an operating state in which the high-side switch 1H is switched on and the low-side switch 1L is switched off, so that the alternating voltage Vr essentially equals the input voltage Vin. In this example, the second on-state is an operating state in which the low-side switch 1L is switched on and the high-side switch 1H is switched off, so that the alternating voltage Vr is essentially zero. Thus, in this example, the first voltage level Vr1 essentially equals the voltage level of the input voltage Vin, and the second voltage level Vr2 is essentially zero. In the high-impedance state, both, the high-side switch 1H and the low-side switch 1L is switched off. In this operating state, the alternating voltage Vr is defined by the resonant circuit 3 and may essentially range between a voltage level that is slightly above the voltage level of the input voltage Vin and a voltage level that is slightly below zero. This is explained in detail further below.

Inevitably, there are delay times between time instances when the drive signals S1H, S1L change from the on-level to the off-level, or vice versa, and the respective switch 1H, 1L changes from the on-state to the off-state, or vice versa. The high impedance state, which occurs when both drive signals S1H, S1L have an off-level, helps to avoid that both switches S1H, S1L are switched on at the same time and, therefore, helps to avoid a cross current in the half-bridge 21.

The alternating voltage Vr causes a current Ir in the resonant circuit. This current Ir, which is referred to as resonant current in the following, is an alternating current that either flows in a first direction or a second direction. A resonant current Ir flowing in a first direction, which is from the first input node 31 into the resonant circuit 3 (as indicated in Figure 4), is referred to as positive resonant current in the in the direction. Equivalently, the resonant current Ir is negative when it flows in a second direction opposite the first direction.

Referring to the above, the resonant circuit 3 includes at least one inductor, such as the first inductor 36 and the second inductor 37 illustrated in Figures 2 and 3. This inductor cause the inductor current Ir to continue to flow when the resonant circuit 3 is disconnected from the input 11, 12 such as in the high-impedance state. In this operating state, the freewheeling elements 12H, 12L take over the inductor current Ir, wherein these freewheeling elements are connected such that one of the freewheeling elements 12H, 12L takes over the resonant current Ir when it is positive and the other one of the freewheeling elements 12H, 12L takes over the resonant current Ir when it is negative.

Referring to Figure 1, a polarity of the freewheeling element 12H of the high-side switch 1H is such that the freewheeling element 2H conducts a current when an electrical potential at the tap 1T becomes higher than the electrical potential at the first input node 11, which is when the resonant current Ir is negative. Furthermore, a polarity of the freewheeling element 12L of the low-side switch 1L is such that the freewheeling element 12L conducts a current, when the electrical potential at the tap 1T becomes lower than the electrical potential at the second input node 12, which is when the resonant current Ir is negative.

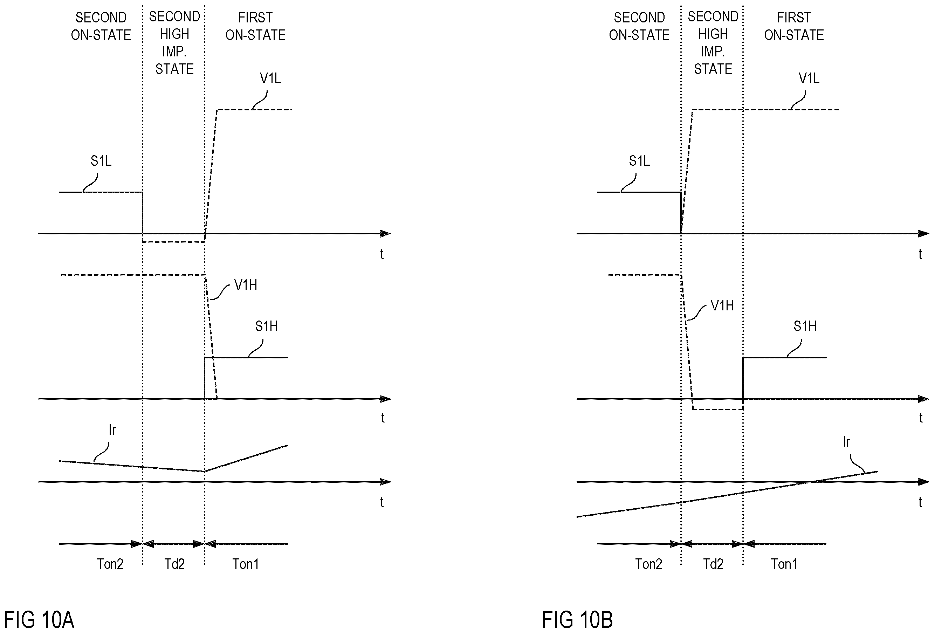

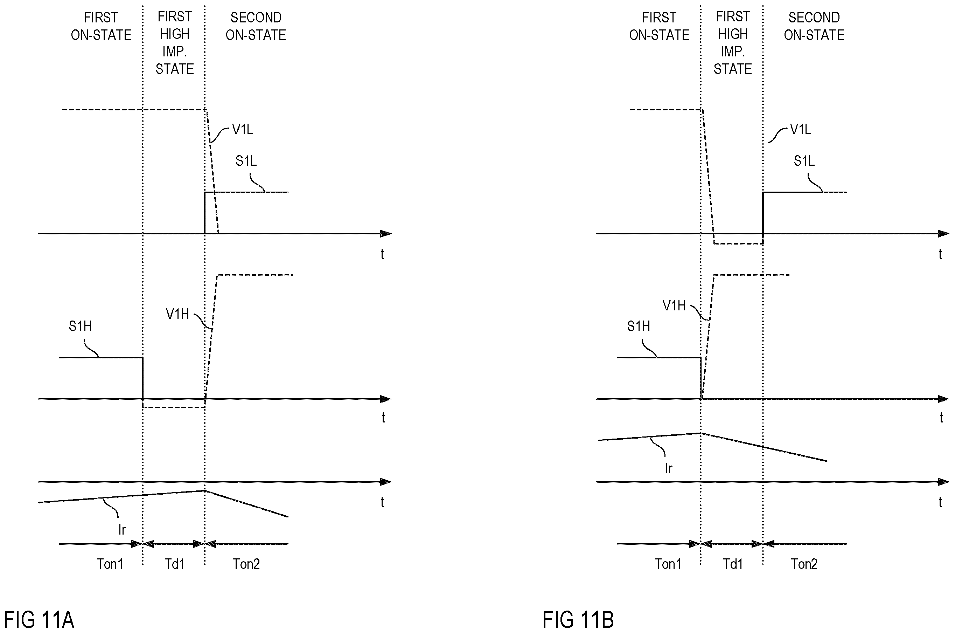

When operating the switching circuit 2 only based on the first and second on-times Ton1, Ton2 and the first and second high-impedance times Td1, Td2 hard commutation of the half-bridge 21 may occur in certain scenarios. Basically, hard commutation occurs when during the high-impedance state the freewheeling element of one of the high-side switch 1H and the low-side switch 1L conducts before in the successive on-state the other one of the high-side switch 1H and the low-side 1H, 1L switches on. Two different scenarios in which hard commutation of the switching circuit according to Figure 8 may occur are illustrated in Figures 10A and 11A.

Figure 10A illustrates a first scenario in which hard commutation may occur. More specifically, Figure 10A shows signal diagrams of the low-side drive signal S1L and the high-side drive signal S1H in a time period in which the switching circuit 2 transitions from the second on-state (in which the low-side switch S1L is switched on) to the first on-state (in which the high-side switch S1H is switched on). In the scenario illustrated in Figure 10A, the resonant current Ir is positive throughout the second high-impedance state between the second on-state and the first on-state, so that the resonant current Ir flows through the rectifier element 12L of the low-side switch 1L during the second high-impedance state. A voltage V1L across the low-side switch, which is illustrated in dashed lines in Figure 6A is negative throughout the second high-impedance state and is given by the voltage drop caused by the resonant current Ir across the freewheeling element 12L. A voltage V1H across the high-side switch, which is also illustrated in dashed lines in Figure 6A is essentially given by the input voltage Vin during the second high-impedance state.

In the scenario illustrated in Figure 10A, right before the high-side switch S1H switches on, the freewheeling element 12L of the low-side switch 1L is conducting. Switching on the high-side switch S1H causes the voltage V1L across the low-side switch 1L to rapidly change its polarity and to increase, so that the current through the freewheeling element 12L is interrupted. This is known as hard commutation. Such hard commutation is associated with relatively high losses. Furthermore, in the event that the low-side switch 1L is a MOSFET and the freewheeling element 12L is an integrated body diode of the MOSFET, hard commutation may cause a degradation or even a damage of the MOSFET.

Referring to Figure 10B, which shows signal diagrams of the same signals as illustrated in Figure 10A, hard commutation in a transition from the second on-state to the first on-state does not occur when the resonant current Ir, at the end of the second on-state is negative. In this case, during the second high-impedance state, that is, after switching off the low-side switch 1L, the freewheeling element 12H of the high-side switch 1H takes over the resonant current Ir. This current continues to flow through the high-side switch 1H in the first on-state, so that hard commutation can be avoided.

Another scenario in which hard commutation may occur is illustrated in Figure 7A. Figure 7A shows signal diagrams of the low-side drive signal S1L, the high-side drive signal S1H, the resonant current Ir and the voltages across the high-side switch 1H and the low-side switch 1L in a transition from the first on-state, in which the high-side switch 1H is switched on and the low-side switch 1L is switched off, to the second on-state, in which the low-side switch 1L is switched on and the high-side switch 1H is off. In the scenario illustrated in Figure 11A, the resonant current Ir is negative at the end of the first on-state and throughout the first between the first on-state and the second on-state, so that, during the first high-impedance state, the resonant current Ir flows through the freewheeling element 12H of the high-side switch 1H. The voltage V1H across the high-side switch 1H is negative and is given by the voltage caused by the resonant current Ir across the freewheeling element 12H.

When the low-side switch 1L switches on at the beginning of the second on-state, hard commutation in the high-side switch 1H occurs. That is, the voltage across the high-side switch 1H changes its polarity and rapidly increases, so that the current through the freewheeling element 12H is interrupted.

Referring to Figure 11B, which shows signal diagrams of the same signals as illustrated in Figure 11A, hard commutation in a transition from the first on-state to the second on-state does not occur when the resonant current Ir is positive at the end of the first on-state. In this example, during the first high-impedance state, the resonant current Ir flows through the freewheeling element 12L of the low-side switch 1L. This current continues to flow through the low-side switch 1L in the second on-state, so that hard commutation can be avoided.

Whether or not hard commutation may occur in the transition from an on-state to a successive on-state is, inter alia, dependent on an overall operating state of the power converter. This overall operating state includes, for example, the power consumption of the load and the switching frequency adjusted by the controller 5 dependent on the feedback signal Sfb. A hard commutation of the type illustrated in Figure 10A may occur, in particular, during start-up or during a burst mode of the LLC converter. In a burst mode, the switching circuit 2 is deactivated for a certain time period and then switches at a given switching frequency adjusted by the feedback signal Sfb for a certain time period. A hard commutation of the type shown in Figure 11A may occur, in particular, when a power consumption of the load Z is relatively high and/or when the power consumption of the load rapidly changes.

The type of hard commutation illustrated in Figure 10A that may occur in the transition between from a second on-state to a first on-state of the switching circuit 2 is referred to as first type hard commutation in the following. Furthermore, the hard commutation illustrated in Figure 11A that may occur in the transition from a first on-state to a second on-state of the switching circuit 2 is referred to as second type hard commutation in the following.

Referring to Figures 10A and 10B, hard commutation in the transition from the second on-state to the first on-state may occur when, at the end of the second on-state, the resonant current Ir is positive, while hard commutation does not occur when the resonant current Ir is negative at the end of the second state. According to one example the hard commutation parameter is the resonant current Ir and the certain condition to be met by the resonant current Ir at the end of the second on-state in order to avoid hard commutation is that the resonant current Ir is negative. In this example, when the resonant current is positive at the end of the second on-state, the controller 5 maintains the switching circuit 2 in the high-impedance state after the second on-state at least until the resonant current Ir becomes negative.

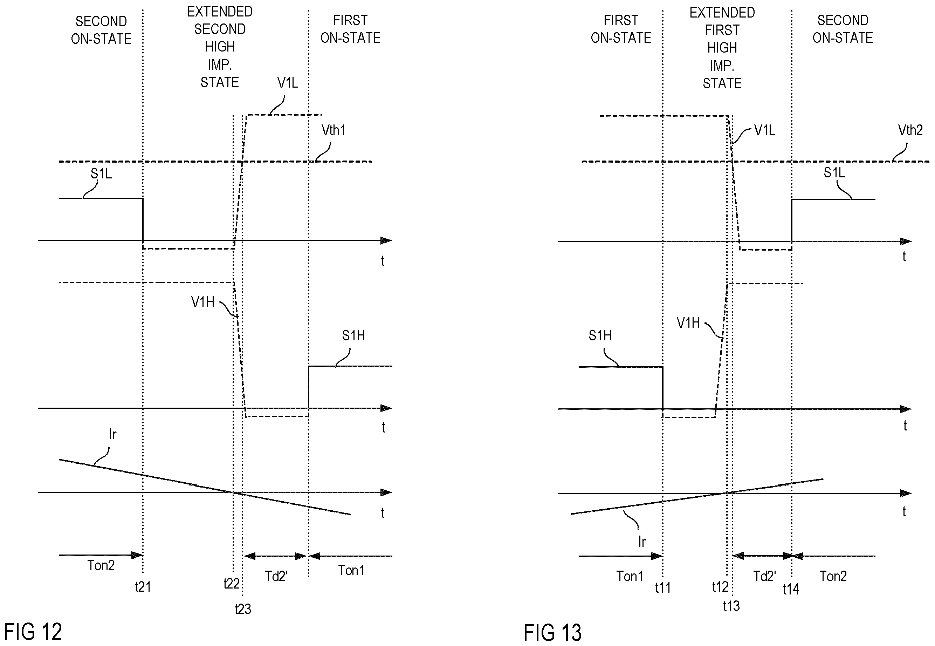

According to another example, the hard commutation parameter is the voltage V1L across the low-side switch 1L. In the high-impedance state, this voltage V1L is negative when the resonant current Ir is positive and is positive when the resonant current Ir is negative. Thus, according to one example the certain condition to be met by this voltage V1L at the end of the second on-state in order to avoid hard commutation is that the voltage V1L is higher than a predefined first threshold Vth1. Figure 12 shows signal diagrams of the same signals as illustrated in Figures 10A and 10B and illustrates how hard commutation can be avoided when using the voltage V1L across the low-side switch 1L as the hard commutation parameter.

In the example illustrated in Figure 12 the second on-state ends at a first time instance t21. The resonant current Ir is positive at this first time instance t21, so that the voltage V1L across the low-side switch 1L is negative and does not meet the certain condition of being higher than the predefined threshold Vth1. Thus, the switching circuit 2 is maintained in the (second) high-impedance state that follows the second on-state at least until the voltage V1L across the low-side switch 1L is higher than the first threshold Vth1. In the example illustrated in Figure 12, the resonant current Ir turns negative at a second time instance t22 and the voltage V1L across the low-side switch 1L reaches the first threshold Vth1 at a third time instance t23.

"Maintaining the switching circuit 2 in the high-impedance state at least until the voltage V1L across the low-side switch 1L is higher than the first threshold Vth1" may include changing the operating state of the switching circuit 2 to the successive on-state (the first on-state in the example according to Figure 12) as soon as the voltage V1L across the low-side switch 1L reaches the first threshold Vth1 or may include changing the operating state of the switching circuit 2 to the successive on-state after a delay time Td2' after the voltage V1L across the low-side switch 1L has reached the first threshold Vth1. The latter is illustrated in the example shown in Figure 12. According to one example, the delay time Td2' equals the predefined high-impedance time Td2 that governs the duration of the (second) high-impedance state between the second on-state and the successive first on-state when the hard commutation parameter meets the certain condition at the end of the second on-state.

Referring to Figures 11A and 11B, hard commutation in the transition from the first on-state to the second on-state may occur when, at the end of the first on-state, the resonant current Ir is negative, while hard commutation does not occur when the resonant current Ir is positive at the end of the second state. According to one example the hard commutation parameter is the resonant current Ir and the certain condition to be met by the resonant current Ir at the end of the first on-state in order to avoid hard commutation is that the resonant current Ir is positive. In this example, when the resonant current is negative at the end of the first on-state, the controller 5 maintains the switching circuit 2 in the high-impedance state after the first on-state at least until the resonant current Ir becomes positive.

According to another example, the hard commutation parameter is the voltage V1L across the low-side switch 1L. In the high-impedance state, this voltage V1L is negative when the resonant current Ir is positive and is positive when the resonant current Ir is negative. Thus, according to one example the certain condition to be met by this voltage V1L at the end of the first on-state in order to avoid hard commutation is that the voltage V1L is lower than a predefined second threshold Vth2. The first threshold Vth1 explained with reference to Figure 12 and the second threshold Vth2 may be equal. According to another example, the first threshold Vth1 and the second threshold Vth2 are different.

Figure 13 shows signal diagrams of the same signals as illustrated in Figures 11A and 11B and illustrates how hard commutation can be avoided when using the voltage V1L across the low-side switch 1L as the hard commutation parameter. In the example illustrated in Figure 13 the first on-state ends at a first time instance t11. The resonant current Ir is negative at this first time instance t11, so that the voltage V1L across the low-side switch 1L is positive and does not meet the certain condition of being lower than the predefined second threshold Vth2. Thus, the switching circuit 2 is maintained in the (first) high-impedance state that follows the first on-state at least until the voltage V1L across the low-side switch 1L is lower than the second threshold Vth2. In the example illustrated in Figure 13, the resonant current Ir turns positive at a second time instance t12 and the voltage V1L across the low-side switch 1L reaches the second first threshold Vth2 at a third time instance t13.

"Maintaining the switching circuit 2 in the high-impedance state at least until the voltage V1L across the low-side switch 1L is lower than the second threshold Vth2" may include changing the operating state of the switching circuit 2 to the successive on-state (the first on-state in the example according to Figure 12) as soon as the voltage V1L across the low-side switch 1L reaches the second threshold Vth2 or may include changing the operating state of the switching circuit 2 to the successive on-state after a delay time Td1' after the voltage V1L across the low-side switch 1L has reached the second threshold Vth2. The latter is illustrated in Figure 13. According to one example, the delay time Td1' equals the predefined high-impedance time Td1 that governs the duration of the (first) high-impedance state between the first on-state and the successive second on-state when the hard commutation parameter meets the certain condition at the end of the first on-state.

According to one example, each of the first threshold and the second threshold is selected from between 5% and 90% of the input voltage Vin, in particular from between 20% and 80% of the input voltage Vin or from between 30% and 70% of the input voltage Vin.

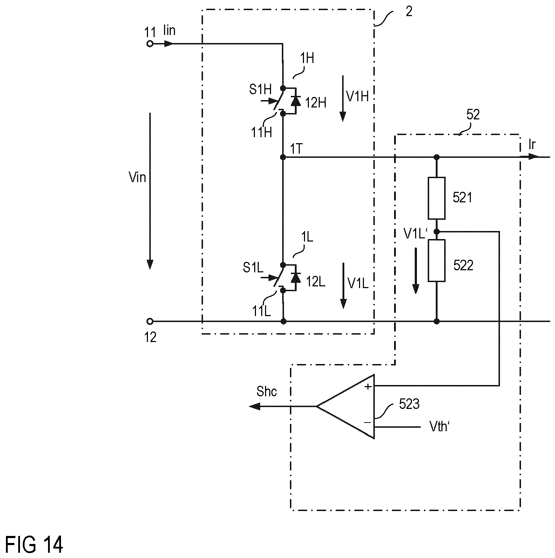

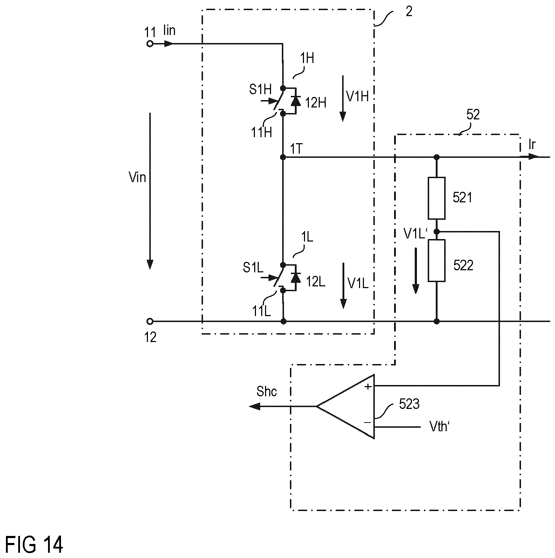

Figure 14 illustrates one example of a hard commutation parameter monitoring circuit 52 that is configured to monitor the voltage across the low-side switch 1L as the hard commutation parameter and output the hard commutation signal Shc. Referring to Figure 14 the monitoring circuit includes a voltage divider connected in parallel with the low-side switch 1L and configured to output a sense voltage V1L' that is proportional to the voltage V11L across the low-side switch 1L. In the example shown in Figure 14, the voltage divider is a resistive voltage divider and includes a first resistor 521 and a second resistor 521 connected in series. The sense voltage V1L' is a voltage across the second resistor 522 in this example.

Referring to Figure 14, the hard commutation parameter monitoring circuit 52 further includes a comparator 523 that is configured to compare the sense voltage V1L' with a voltage Vth' that represents the first or second threshold Vth1, Vth2 explained with reference to Figures 12 and 13. According to one example, the first and the second threshold Vth1, Vth2 have the same voltage level Vth and the voltage Vth' received by the comparator represents this threshold level Vth, that is, the voltage Vth' received by the comparator is proportional to the voltage level Vth defining the first and second thresholds Vth1, Vth2, wherein a proportionality factor is given by a voltage divider ratio of the voltage divider (Vth' = Vth*R522/(R521+R522), wherein R521, R522 are resistances of the first and second resistor, respectively).

Referring to Figure 14, the comparator 523 outputs the hard commutation signal Shc. The hard commutation signal Shc either has a first signal level or a second signal level, wherein the first signal level indicates that the voltage V1L across the low-side switch 1L is higher than the threshold voltage Vth and the second signal level indicates that the voltage V1L across the low-side switch 1L is lower than the threshold voltage Vth.

According to one example, the resistors 521, 522 of the voltage divider are adapted to one another such that the voltage V1L' across the second resistor 522 is between 1/50 and 1/200 of the voltage V1L across the low-side switch 1L. Referring to the above, the voltage V1L across the low-side switch 1L may range between slightly below zero and slightly above zero, so that the maximum of this voltage V1L is essentially given by the input voltage Vin. According to one example, the input voltage Vin is selected from a range of between several 10V and several 100V, such as from between 80V and 800V.

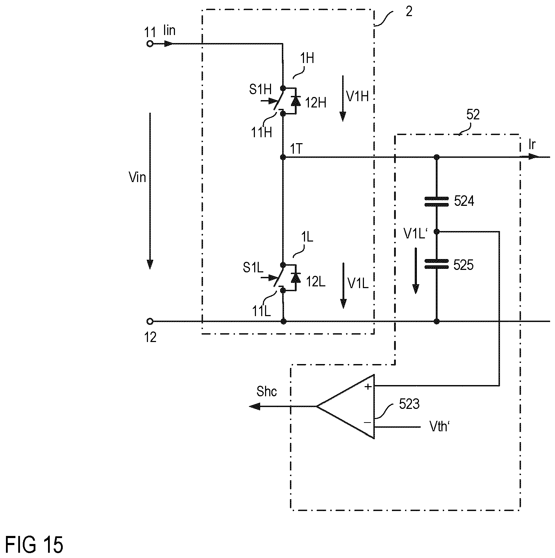

Figure 15 shows a modification of the hard commutation parameter monitoring circuit 52 according to Figure 14. The circuit according to Figure 15 is different from the circuit according to Figure 14 in that it includes a capacitive voltage divider with a first capacitor 524 and a second capacitor 525 instead of the resistive voltage divider. The sense voltage V1l' is the voltage across the second capacitor in this example.

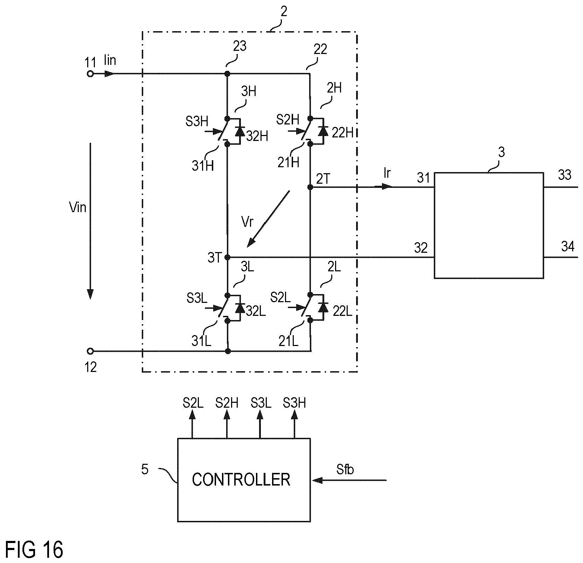

Implementing the switching circuit 2 with one half-bridge as illustrated in Figure 8 is only an example. According to another example illustrated in Figure 16, the switching circuit 2 includes a first half-bridge 22 with a first high-side switch 2H and a first low-side switch 2L and a second half-bridge 23 with a second high-side switch 3H and a second low-side switch 3L. The first half-bridge 22 is connected between the input nodes 11, 12 of the power converter and the first input node 31 of the resonant circuit 3, and the second half-bridge 23 is connected between the input nodes 11, 12 of the power converter and the second input node 32 of the resonant circuit 3. More specifically, the first high-side switch 2H and the first low-side switch 2L are connected in series between the first input node 11 and the second input node 12 of the power converter and a tap 2T of the first half-bridge 22 is connected to the first input node 31 of the resonant circuit 3. Furthermore, the second high-side switch 3H and the second low-side switch 3L are connected in series between the first input node 11 and the second input node 12 of the power converter and a tap 3T of the second half-bridge 23 is connected to the second input node 32 of the resonant circuit 3. The tap 2T of the first half-bridge 22 is a circuit node between the first high-side switch 2H and the first low-side switch 2L, and the tap 3T of the second half-bridge 23 is a circuit node between the second high-side switch 3H and the second low-side switch 3L. The resonant voltage Vr is a voltage between the tap 2T of the first half-bridge 22 and the tap 3T of the second half-bridge 23. The tap 2T of the first half-bridge 22 is also referred to as first tap in the following, and the tap 3T of the second half-bridge 23 is also referred to as second tap in the following.

Referring to Figure 16, each of the switches 2H, 2L, 3H, 3L in the first and second half-bridges 22, 23 includes a switching element 21H, 21L, 31H, 31L and a freewheeling element 22H, 22L, 32H, 32L connected in parallel with the respective switching element 21H, 21L, 31H, 31L. Everything explained before regarding the implementation of the electronic switches in the switching circuit 2 applies to the implementation of the switches 2H, 2L, 3H, 3L of the half-bridges 22, 23 illustrated in Figure 16 accordingly.

When the switching circuit 2 is implemented as illustrated in Figure 16, the controller 5 generates four drive signals, a first high-side drive signal S2H received by the first high-side switch 2H, a first low-side drive signal S2L received by the first low-side switch 2L, a second high-side drive signal S3H received by the second high-side switch 3H, and a second low-side drive signal S3L received by the second low-side switch 3L. As explained above, the controller 5 alternatingly operates the switching circuit 2 in a first on-state and a second on-state and a high-impedance state between the on-states in order to generate the resonant voltage Vr based on the input voltage Vin.

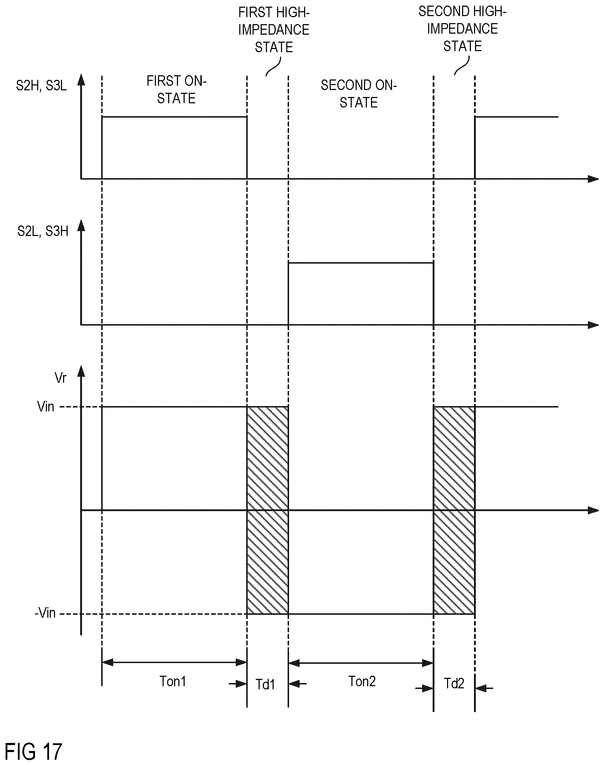

Figure 17 shows signal diagrams that illustrate operating a switching circuit 2 of the type shown in Figure 16 in the three different operating states, the first on-state, the second on-state, and the high-impedance state. More specifically, Figure 17 shows signal diagrams of the first high-side drive signal S2H, the first low-side drive signal S2L, the second high-side drive signal S3H, and the second low-side drive signal S3L. Furthermore, Figure 17 schematically illustrates a signal waveform of the resonant voltage Vr generated by the switching circuit 2. Just for the purpose of illustration, it is assumed that a high signal level of a respective drive signal S2H, S2L, S3H, S3L represents an on-level that switches on the respective switch and a low signal level represents an off-level that switches off the respective switch.

According to one example, operating the switching circuit 2 according to Figure 16 in the first on-state includes switching on the first high-side switch 2H and the second low-side switch 3L and switching off the second high-side switch 3H and the first low-side switch 2L, so that the resonant voltage Vr essentially equals the input voltage Vin. Operating the switching circuit in the second on-state includes switching on the second high-side switch 3H and the first low-side switch 2L and switching off the first high-side switch 2H and the second low-side switch 3L, so that the resonant voltage Vr is negative and has a voltage level that essentially equals the voltage level of the input voltage Vin. That is, in the first on-state $V_r \approx Vin$, and in the second on-state, $Vr \approx -Vin$. In the high-impedance states, each of the switches 2H, 2L, 3H, 3L is switched off. In this operating state, the resonant voltage Vr is defined by the resonant circuit 3 and may essentially vary between slightly higher than the input voltage Vin and slightly lower than zero.

In the switching circuit 2 according to Figure 16, polarities of the freewheeling element 22H of the first high-side switch 2H and the freewheeling element 32L of the second low-side switch 3L are such that these freewheeling elements 22H, 32L take over the resonant current Ir in the high impedance state when the resonant current is negative (that is, flows in a direction opposite the direction shown in Figure 16). Furthermore, polarities of the freewheeling element 22L of the first low-side switch 2H and the freewheeling element 32H of the second high-side switch 3H are such that these freewheeling elements 22L, 32H take over the resonant current Ir in the high impedance state when the resonant current is positive (that is, flows in a direction opposite the direction shown in Figure 16).

In the switching circuit according to Figure 16, a first type hard commutation, which is a hard commutation in the transition from the second on-state to the first on-state, may occur when the resonant current Ir is positive at the end of the second on-state. Equivalently, a second type hard commutation, which is a hard commutation in the transition from the first on-state to the second on-state, may occur when the resonant current Ir is negative at the end of the first on-state.

When the switching circuit 2 is implemented as illustrated in Figure 16, the resonant current Ir may be used as the hard commutation parameter. Alternatively, the voltage across the first low-side switch 2L and/or the voltage across the second low-side switch 3L may be used as the hard commutation parameter in the same way as the voltage V1L across the low-side 1L explained herein above.

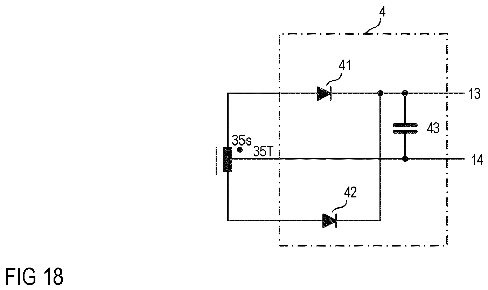

Figure 18 illustrates one example of the rectifier circuit. In this example, the secondary winding 35s includes a tap. The rectifier circuit 4 includes a first rectifier element 41 connected between a first node of the secondary winding 35s and the first output node 13 and a second rectifier element 42 connected between a second node of the secondary winding 35s and the first output node 13. The tap 35T is connected to the second output node 14. Furthermore, a capacitor 43 may be connected between the output nodes 13, 14. The rectifier elements 41, 42 may be implemented as passive rectifier elements (as illustrated) or as active rectifier elements (not illustrated). It should be noted that implementing the rectifier circuit 4 as illustrated in Figure 18 is only an example. Various other types of known rectifier circuits suitable to be used in a resonant power converter may be used as well.

Some examples of the method and the control circuit disclosed herein are briefly summarized by way of numbered examples in the following.

Example 1 - A method, including: in a resonant converter including a switching circuit coupled to an input, and including a resonant circuit coupled to the switching circuit, alternatingly operating the switching circuit in an on-state and a high-impedance state; monitoring a hard commutation parameter; if the hard commutation parameter, at an end of at least one of the on-states, meets a certain condition, operating the switching circuit in the high-impedance state for a predefined duration; and if the hard commutation parameter, at the end of the least one of the on-states, does not meets the certain condition, operating the switching circuit in the high-impedance state at least until the hard commutation parameter meets the certain condition.

Example 2 - The method of example 1, wherein alternatingly operating the switching circuit in the on-state and the high-impedance state includes alternatingly operating the switching circuit in a first on-state for a predefined first on-time and a second on-time for a predefined second on-time and operating the switching circuit in the high-impedance state between the first and second on-states.

Example 3 - The method according to example 1 or 2, wherein operating the switching circuit in the high-impedance state at least until the hard commutation parameter meets the certain condition includes operating the switching circuit in the high-impedance state until the hard commutation parameter meets the certain condition and, in addition, for a predefined delay time.

Example 4 - The method of example 3, wherein the predefined duration of operating the switching circuit in the high-impedance state essentially equals the predefined delay time.

Example 5 - The method of any one of examples 1 to 4, wherein the hard commutation parameter is a resonant current in the resonant circuit.

Example 6 - The method of example 5, wherein, at the end of the first on-state, the resonant current meets the certain condition when the resonant current flows in a first direction.

Example 7 - The method of example 5 or 6, wherein, at the end of the second on-state, the resonant current meets the certain condition when the resonant current flows in a second direction opposite the first direction.

Example 8 - The method of any one of examples 1 to 7, wherein the switching circuit includes at least one half-bridge with a high-side switch and a low-side switch, and wherein the hard commutation parameter is a voltage across the low-side switch.

Example 9 - The method of example 8, wherein, at the end of the first on-state, the voltage across the low-side switch meets the certain condition when the voltage is lower than a predefined threshold.

Example 10 - The method of example 8 or 9, wherein, at the of the second on-state, the voltage across the low-side switch meets the certain condition when the voltage is higher than a predefined threshold.

Example 11 - The method of example 9 or 10, wherein the switching circuit is configured to receive an input voltage, and wherein the predefined threshold is selected from between 5% and 90% of the input voltage.

Example 12 - The method of any one of example 1 to 11, wherein the resonant converter further includes: an output configured to provide an output parameter; and a feedback circuit configured to receive an output signal representing the output parameter and generate a feedback signal based on the output signal, wherein the first on-time and the second on-time are adjusted dependent on the feedback signal.

Example 13 - The method of example 12, wherein the predefined duration of the high impedance state is adjusted dependent on the feedback signal.

Example 14 - A control circuit configured to: alternatingly operate a switching circuit coupled between an input and a resonant circuit in a resonant power converter in an on-state and a high-impedance state; monitor a hard commutation parameter at an end of at least one of the on-states; if the hard commutation parameter meets a certain condition, operate the switching circuit in the high-impedance state for a predefined duration; and if the hard commutation parameter does not meets the certain condition, operate the switching circuit in the high-impedance state at least until the hard commutation parameter meets the certain condition.

Example 15 - The control circuit according to example 14, wherein alternatingly operating the switching circuit in the on-state and the high-impedance state includes alternatingly operating the switching circuit in a first on-state for a predefined first on-time and a second on-time for a predefined second on-time and operating the switching circuit in the high-impedance state between the first and second on-states.

**Claims**

1. A method, comprising:

in a resonant converter comprising a switching circuit (2) coupled to an input (11, 12), and comprising a resonant circuit (3) coupled to the switching circuit (2), alternatingly operating the switching circuit (2) in an on-state and a high-impedance state;
monitoring a hard commutation parameter;
if the hard commutation parameter, at an end of at least one of the on-states, meets a certain condition, operating the switching circuit (2) in the high-impedance state for a predefined duration (Tdl, Td2); and
if the hard commutation parameter, at the end of the least one of the on-states, does not meets the certain condition, operating the switching circuit (2) in the high-impedance state at least until the hard commutation parameter meets the certain condition.

2. The method of claim 1,
wherein alternatingly operating the switching circuit (2) in the on-state and the high-impedance state comprises alternatingly operating the switching circuit (2) in a first on-state for a predefined first on-time (Ton1) and a second on-time (Ton2) for a predefined second on-time (Ton2) and operating the switching circuit (2) in the high-impedance state between the first and second on-states.

3. The method according to claim 1 or 2,
wherein operating the switching circuit (2) in the high-impedance state at least until the hard commutation parameter meets the certain condition comprises operating the switching circuit (2) in the high-impedance state until the hard commutation parameter meets the certain condition and, in addition, for a predefined delay time (Td1', Td2').

4. The method of claim 3, wherein the predefined duration (Tdl, Td2) of operating the switching circuit (2) in the high-impedance state essentially equals the predefined delay time (Td1', Td2').

5. The method of any one of claims 1 to 4,
wherein the hard commutation parameter is a resonant current (Ir) in the resonant circuit (3).

6. The method of claim 5,
wherein, at the end of the first on-state, the resonant current (Ir) meets the certain condition when the resonant current (Ir) flows in a first direction.

7. The method of claim 5 or 6,
wherein, at the end of the second on-state, the resonant current (Ir) meets the certain condition when the resonant current (Ir) flows in a second direction opposite the first direction.

8. The method of any one of the preceding claims,
wherein the switching circuit (2) comprises at least one half-bridge (21; 22, 23) with a high-side switch (S1H; S2H, S3H) and a low-side switch (S1L; S2L, S3L), and
wherein the hard commutation parameter is a voltage (V1L) across the low-side switch.

9. The method of claim 8,
wherein, at the end of the first on-state, the voltage (V1L) across the low-side switch (1L) meets the certain condition when the voltage (V1L) is lower than a predefined threshold (Vth2).

10. The method of claim 8 or 9,
wherein, at the of the second on-state, the voltage (V1L) across the low-side switch (1L) meets the certain condition when the voltage (V1L) is higher than a predefined threshold (Vth1).

11. The method of claim 9 or 10,
wherein the switching circuit (2) is configured to receive an input voltage (Vin), and
wherein the predefined threshold (Vth1, Vth2) is selected from between 5% and 90% of the input voltage (Vin).

12. The method of any one of the preceding claims, wherein the resonant converter further comprises:

an output (13, 14) configured to provide an output parameter (Vout, Iout); and

a feedback circuit configured to receive an output signal (Sout) representing the output parameter (Vout, Iout) and generate a feedback signal (Sfb) based on the output signal (Sout),

wherein the first on-time (Ton1) and the second on-time (Ton2) are adjusted dependent on the feedback signal (Sfb).

13. The method of claim 12,

wherein the predefined duration (Tdl, Td2) of the high impedance state is adjusted dependent on the feedback signal (Sfb).

14. A control circuit configured to:

alternatingly operate a switching circuit (2) coupled between an input (11, 12) and a resonant circuit (3) in a resonant power converter in an on-state and a high-impedance state;

monitor a hard commutation parameter at an end of at least one of the on-states;

if the hard commutation parameter meets a certain condition, operate the switching circuit (2) in the high-impedance state for a predefined duration (Tdl, Td2); and

if the hard commutation parameter does not meets the certain condition, operate the switching circuit (2) in the high-impedance state at least until the hard commutation parameter meets the certain condition.

15. The control circuit according to claim 14,

wherein alternatingly operating the switching circuit (2) in the on-state and the high-impedance state comprises alternatingly operating the switching circuit (2) in a first on-state for a predefined first on-time (Ton1) and a second on-time (Ton2) for a predefined second on-time (Ton2) and operating the switching circuit (2) in the high-impedance state between the first and second on-states.

FIG 1

FIG 2

FIG 3

FIG 4

OPERATING THE SWITCHING CIRCUIT IN AN ON-STATE FOR A PREDEFINED TIME PERIOD AND MONITORING A HARD COMMUTATION PARAMETER — 101

HARD COMMUTATION PARAMETER MEETS CERTAIN CONDITION AT THE END OF THE ON-STATE? — 102

YES

NO

OPERATING THE SWITCHING CIRCUIT IN THE HIGH-IMPEDANCE STATE FOR A PREDEFINED TIME PERIOD — 103

OPERATING THE SWITCHING CIRCUIT IN THE HIGH-IMPEDANCE STATE AT LEAST UNTIL THE HARD COMMUTATION PARAMETER MEETS THE FIRST CONDITION — 104

OPERATING THE SWITCHING CIRCUIT IN A SUCCESSIVE ON-STATE FOR A PREDEFINED TIME PERIOD — 105

FIG 5

DRIVE SIGNALS

FIG 6

FIG 7

FIG 8

FIG 9

FIG 10A

FIG 10B

FIRST
ON-STATE

FIRST
HIGH
IMP.
STATE

SECOND
ON-STATE

V1L

S1L

t

S1H

V1H

t

Ir

t

Ton1

Td1

Ton2

FIG 11A

FIRST
ON-STATE

FIRST
HIGH
IMP.
STATE

SECOND
ON-STATE

V1L

S1L

t

S1H

V1H

Ir

t

t

Ton1

Td1

Ton2

FIG 11B

FIG 13

FIG 12

FIG 14

FIG 14

FIG 15

FIG 16

FIG 17

FIG 18

**Europäisches Patentamt**
**European Patent Office**
**Office européen des brevets**

# EUROPEAN SEARCH REPORT

Application Number

EP 21 16 6345

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 538 535 A2 (ST MICROELECTRONICS SRL [IT]) 26 December 2012 (2012-12-26) * paragraphs [0023] - [0025], [0028], [0030], [0034], [0056]; figures 3-9 * | 1-15 | INV. H02M7/48 H02M1/00 H02M3/337 H02M7/538 |
| X | US 2011/187335 A1 (GRAKIST ALFRED [NL] ET AL) 4 August 2011 (2011-08-04) | 1,14 | |
| A | * paragraphs [0049], [0059], [0065], [0071]; figures 1-6 * | 2-13,15 | |
| X | US 2011/025301 A1 (FELDTKELLER MARTIN [DE]) 3 February 2011 (2011-02-03) | 1,14 | |
| A | * paragraphs [0085], [0090]; figures 1,5,6,10,11 * | 2-13,15 | |
| X | US 2018/367042 A1 (ANDERSEN THOMAS [DK] ET AL) 20 December 2018 (2018-12-20) | 1,14 | |
| A | * paragraphs [0085], [0087], [0088], [0096]; figures 1,1Bd, 1Be, 2-7 * | 2-13,15 | |
| X | US 2009/273957 A1 (FELDTKELLER MARTIN [DE]) 5 November 2009 (2009-11-05) | 1,14 | TECHNICAL FIELDS SEARCHED (IPC) |
| A | * paragraphs [0033], [0062]; figures 3a-d,4-7 * | 2-13,15 | H02M |
| X | US 2010/226050 A1 (KOO GWAN-BON [KR] ET AL) 9 September 2010 (2010-09-09) | 1,14 | |
| A | * paragraphs [0010], [0013], [0016], [0059], [0061]; figures 3A,4-7 * | 2-13,15 | |
| X | US 2017/110973 A1 (CHEN YUEDONG [CN]) 20 April 2017 (2017-04-20) | 1,14 | |
| A | * paragraph [0047]; figures 2-4,7 * | 2-13,15 | |

The present search report has been drawn up for all claims

| Place of search | Date of completion of the search | Examiner |
|---|---|---|
| The Hague | 20 August 2021 | Kanelis, Konstantin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 21 16 6345

This annex lists the patent family members relating to the patent documents cited in the above-mentioned European search report.
The members are as contained in the European Patent Office EDP file on
The European Patent Office is in no way liable for these particulars which are merely given for the purpose of information.

20-08-2021

| Patent document cited in search report | | Publication date | Patent family member(s) | | Publication date |
|---|---|---|---|---|---|
| EP 2538535 | A2 | 26-12-2012 | EP | 2538535 A2 | 26-12-2012 |
| | | | US | 2012327692 A1 | 27-12-2012 |
| US 2011187335 | A1 | 04-08-2011 | CN | 101803164 A | 11-08-2010 |
| | | | EP | 2201669 A1 | 30-06-2010 |
| | | | US | 2011187335 A1 | 04-08-2011 |
| | | | WO | 2009037613 A1 | 26-03-2009 |
| US 2011025301 | A1 | 03-02-2011 | DE | 102010038557 A1 | 03-02-2011 |
| | | | US | 2011025301 A1 | 03-02-2011 |
| US 2018367042 | A1 | 20-12-2018 | EP | 3317958 A1 | 09-05-2018 |
| | | | US | 2018367042 A1 | 20-12-2018 |
| | | | WO | 2017001184 A1 | 05-01-2017 |
| US 2009273957 | A1 | 05-11-2009 | DE | 102009002819 A1 | 12-11-2009 |
| | | | US | 2009273957 A1 | 05-11-2009 |
| | | | US | 2014285173 A1 | 25-09-2014 |
| US 2010226050 | A1 | 09-09-2010 | KR | 20100100244 A | 15-09-2010 |
| | | | US | 2010226050 A1 | 09-09-2010 |
| | | | US | 2013070372 A1 | 21-03-2013 |
| US 2017110973 | A1 | 20-04-2017 | CN | 105375768 A | 02-03-2016 |
| | | | US | 2017110973 A1 | 20-04-2017 |

EPO FORM P0459

For more details about this annex : see Official Journal of the European Patent Office, No. 12/82